# EUROPEAN PATENT APPLICATION

(11) **EP 4 796 819 A1**
(43) Date of publication of application: **26.08.2026**
(21) Application number: 25842439.9
(22) Date of filing: 27.10.2025
(51) Int. Cl.: F16K 11/076, F25B 41/26

(54) **FLOW PATH SWITCHING VALVE, AND INDOOR UNIT AND OUTDOOR UNIT OF AIR CONDITIONING DEVICE PROVIDED WITH SAME**

(30) Priority: 17.12.2024 JP 2024221130
(71) Applicant: DAIKIN INDUSTRIES, LTD., Osaka-Shi, Osaka 530-0001 (JP)
(72) Inventor: OKUNO, Masato, Osaka-shi, Osaka 530-0001 (JP); HARAGUCHI, Yuu, Osaka-shi, Osaka 530-0001 (JP); TAKAHASHI, Ken, Osaka-shi, Osaka 530-0001 (JP)
(74) Representative: Hoffmann Eitle
(86) International application number: PCT/JP2025/037533
(87) International publication number: WO 2026/133734

(57) **Abstract**

Provided is a flow path switching valve having the flow paths extending in multiple directions, the flow path switching valve preventing a valve element from being separated from a seal member. A flow path switching valve includes a valve body (40), a valve element (50), and a seal member (70). The valve body (40) wherein a valve chamber (30) is formed internally, and at least three or more ports (Pi1 to Pi3) serving as fluid inlets and outlets are provided on the wall surface forming the valve chamber (30). The valve element (50) is disposed in the valve chamber (30) and has a first passage (51) through which the fluid flows. The seal member (70) seals an interface between the valve element (50) and at least one of the ports. The seal member (70) includes a base portion (80) and an extended portion (90). The base portion (80) is disposed on the port side. The extended portion (90) is extended so as to open from the base portion (80) side toward the valve element (50), and is brought into contact with the valve element (50) while being biased toward the valve element (50) in a communication state.

## Description

### TECHNICAL FIELD

Embodiments disclosed herein relate to a flow path switching valve.

### BACKGROUND ART

A flow path switching valve includes: a valve body including a plurality of flow paths; a valve element configured to switch between the plurality of flow paths; and a seal member sealing an interface between the valve element and a flow port of each of the plurality of flow paths to prevent leakage of a fluid.

For example, according to a ball valve disclosed in Patent Literature 1 (JP S64-058874 A), a valve element having a ball shape is pressed against a tapered surface of a seal member made of metal and having a ring shape. Patent Literature 1 also discloses that separation of the valve element from the tapered surface is prevented in such a way that the seal member is pressed toward the valve element by a spring that is opposite to the valve element with the tapered surface interposed between the spring and the valve element.

### SUMMARY OF THE INVENTION

### <Technical Problem>

According to the ball valve described above, the ball is not separated from the seal member after the assembly, so that a contact pressure between the ball and the seal member is stable, which prevents leakage of a fluid.

However, if the foregoing configuration is applied to a flow path switching valve having flow paths extending in multiple directions, a resultant force of a differential pressure is applied diagonally, rather than perpendicularly, to the tapered surface of the seal member. Consequently, the valve element is sometimes separated from the tapered surface, which cannot secure sealability.

It has therefore been desired to provide a flow path switching valve having a plurality of flow paths extending in multiple directions, the flow path switching valve preventing a valve element from being separated from a seal member.

### <Solution to Problem>

A flow path switching valve according to a first aspect includes a valve body, a valve element, a driver unit, and a seal member. The valve body has a valve chamber formed within the valve body, and has provided at least three or more ports being located on the wall surface through which a fluid flows into and out of the valve body. The valve element is disposed in the valve chamber and has a first passage through which the fluid flows. The driver unit is configured to drive the valve element to bring about a communication state in which the first passage and any of the ports communicate with each other. The seal member seals an interface between the valve element and ports. The seal member includes a base portion and an extended portion. The base portion is disposed on the port side. The extended portion is extended so as to open from the base portion toward valve element, and is brought into contact with the valve element while being biased toward the valve element in the communication state.

According to the flow path switching valve, the extended portion is brought into contact with the valve element while being biased toward the valve element in the communication state. Therefore, the valve element comes into close contact with the extended portion of the seal member so as to push and open the extended portion. Thus, a resultant force of a differential pressure is applied obliquely, rather than perpendicularly, to a tapered surface of the seal member. As a result, even when the valve element is shifted in such a direction that the valve element is separated from the extended portion, the extended portion follows the shift of the valve element, so that the valve element is not separated from the extended portion.

A flow path switching valve according to a second aspect is the flow path switching valve according to the first aspect, in which a space is defined to allow a bend of the extended portion.

The flow path switching valve has no obstacle that hinders the bend of the extended portion. Therefore, even when the valve element is displaced to push the extended portion due to fluctuations in fluid pressure, the extended portion can follow this displacement.

A flow path switching valve according to a third aspect is the flow path switching valve according to the second aspect, in which the space is located between the base portion and the extended portion. The extended portion is bent with respect to the base portion.

The flow path switching valve has no obstacle that hinders the bend of the extended portion. Therefore, even when the valve element is displaced to push the extended portion due to fluctuations in fluid pressure, the extended portion can follow this displacement.

A flow path switching valve according to a fourth aspect is the flow path switching valve according to any one of the first to third aspects, in which a maximum opposite angle across an inner surface of the extended portion is defined as an open angle, and the open angle when the extended portion is in contact with the valve element is larger than the open angle when the extended portion is not in contact with the valve element.

According to the flow path switching valve, although the open angle increases due to the contact of the extended portion with the valve element, drag from the extended portion to the valve element increases as a reaction, which brings the extended portion into contact with the valve element more closely. This results in improvement of sealability between the valve element and the extended portion.

A flow path switching valve according to a fifth aspect is the flow path switching valve according to any one of the first to fourth aspects, in which the valve element is in contact with an area between a center and a distal end of the extended portion in a no-load state in which no fluid flows through the first passage of the valve element.

According to the flow path switching valve, since the extended portion is extended so as to open from the base portion toward the valve element, the distal end of the extended portion bends with ease compared to a proximal end of the extended portion, so that the extended portion follows the displacement of the valve element with ease. However, there is a high possibility that a contact point between the valve element and the extended portion is shifted toward the proximal end if the valve element receives a pressure and accordingly pushes the extended portion. Therefore, the valve element is previously set to come into contact with an area between the center and the distal end of the extended portion in order to restrain the contact point between the valve element and the extended portion from being shifted to an area between the center and the proximal end.

A flow path switching valve according to a sixth aspect is the flow path switching valve according to any one of the first to fifth aspects, in which the base portion includes a connection portion and a shaft portion. The connection portion has a ring shape and is in contact with the port. The shaft portion has a tubular shape and connects the connection portion and the extended portion. The shaft portion is larger in thickness than the distal end of the extended portion.

According to the flow path switching valve, the valve element pushes and opens the extended portion when the valve element is switched from a state in which the valve element is separate from the extended portion to a state in which the valve element is in contact with the extended portion. If the thickness of the shaft portion is smaller than the thickness of the distal end of the extended portion, the shaft portion becomes deformed first due to a force which the valve element applies to the extended portion, so that the sealability between the valve element and the extended portion may be weakened. Therefore, the sealability between the valve element and the extended portion can be secured stably in such a way that the thickness of the shaft portion is made larger than the thickness of the distal end of the extended portion and the distal end of the extended portion becomes deformed with ease upon reception of a force from the valve element.

A flow path switching valve according to a seventh aspect is the flow path switching valve according to any one of the first to sixth aspects, in which the ports of the valve body include a first port, a second port, and a third port. The driver unit drives the valve element to switch the communication state to one of a first state and a second state. In the first state, the first passage causes the first port and the second port to communicate with each other. In the second state, the first passage causes the first port and the third port to communicate with each other.

The flow path switching valve can be used as a four-way switching valve by additionally providing a port connectable to the second port after the communication state is switched from the first state to the second state and a port connectable to the third port after the communication state is switched from the second state to the first state.

A flow path switching valve according to an eighth aspect is the flow path switching valve according to the seventh aspect, in which the driver unit rotates the valve element to switch between the first state and the second state.

The flow path switching valve can be made smaller in size than a flow path switching valve configured to switch a flow path by moving a valve element linearly.

A flow path switching valve according to a ninth aspect is the flow path switching valve according to any one of the first to eighth aspects, in which the seal member is made of a synthetic resin.

According to the flow path switching valve, the synthetic resin seal member is smaller in elastic modulus than a metal seal member, and bends with ease. Therefore, the synthetic resin seal member exhibits good followability to the displacement of the valve element.

A flow path switching valve according to a tenth aspect is the flow path switching valve according to any one of the first to ninth aspects, in which the extended portion which is not in contact with the valve element has an open angle within a range from 60° to 120°.

A flow path switching valve according to an eleventh aspect is the flow path switching valve according to any one of the first to tenth aspects, in which the seal member and the one port are molded integrally.

The flow path switching valve contributes to a reduction in parts count. Therefore, this configuration is advantageous for a flow path switching valve having a large number of ports.

A flow path switching valve according to a twelfth aspect is the flow path switching valve according to any one of the first to tenth aspects, in which the seal member and the port are molded separately.

In a case where the ports have different shapes or are made of different materials, it is more advantageous to keep the seal member and the port separate, thereby standardizing only the seal member.

A flow path switching valve according to a thirteenth aspect is the flow path switching valve according to any one of the first to twelfth aspects, in which the first passage is a tunnel-shaped passage extending through the valve element or a groove-shaped passage located in a peripheral surface of the valve element.

A flow path switching valve according to a fourteenth aspect is the flow path switching valve according to any one of the first to twelfth aspects, in which a fluid pressure within the valve element is higher than a pressure around the valve element.

According to the flow path switching valve, the valve element switches a flow direction of a high-pressure fluid. Therefore, the flow path switching valve can be used as a valve configured to switch a flow direction of a high-pressure refrigerant discharged from a compressor of an air conditioning apparatus.

A flow path switching valve according to a fifteenth aspect is the flow path switching valve according to any one of the first to twelfth aspects, in which a fluid pressure within the valve element is lower than a pressure around the valve element.

According to the flow path switching valve, the valve element switches a flow direction of a low-pressure fluid. Therefore, the flow path switching valve can be used as a valve configured to guide a low-pressure refrigerant from an indoor heat exchanger to the suction side of a compressor during a cooling operation of an air conditioning apparatus and to guide a low-pressure refrigerant from an outdoor heat exchanger to the suction side of the compressor during a heating operation of the air conditioning apparatus.

An indoor unit of an air conditioning apparatus according to a sixteenth aspect is an indoor unit of an air conditioning apparatus, the indoor unit including the flow path switching valve according to any one of the first to thirteenth aspects.

The indoor unit of the air conditioning apparatus allows the refrigerant to flow through the indoor heat exchanger in the same direction regardless of which one of the cooling operation and the heating operation.

An outdoor unit of an air conditioning apparatus according to a seventeenth aspect is an outdoor unit of an air conditioning apparatus, the outdoor unit including the flow path switching valve according to any one of the first to thirteenth aspects.

According to the outdoor unit of the air conditioning apparatus, the flow path switching valve serving as a four-way switching valve reduces mechanical noise compared to a conventional four-way switching valve configured to drive a valve element based on a pressure difference.

### BRIEF DESCRIPTION OF THE DRAWINGS

FIG. 1 is a configuration diagram of an air conditioning apparatus including a flow path switching valve according to the present disclosure.
FIG. 2 is a longitudinal sectional view of the flow path switching valve.
FIG. 3 is an internal perspective view of the flow path switching valve from which a trunk portion and a valve chamber forming wall of a valve body are removed.
FIG. 4 is a diagram illustrating a first state of a valve element and a flow direction of a refrigerant in the flow path switching valve during a cooling operation.
FIG. 5 is a diagram illustrating a second state of the valve element and the flow direction of the refrigerant in the flow path switching valve during a heating operation.
FIG. 6 is an enlarged sectional view of a first port, the valve element, and a seal member that seals an interface between the first port and the valve element.
FIG. 7 is a partial sectional view of the seal member, which illustrates a position of a contact point between a spherical surface of the valve element and an extended surface of the seal member.
FIG. 8 is a perspective view of a valve element, a seal member, and their peripheries in a flow path switching valve according to a second modification.
FIG. 9 is an internal perspective view of a flow path switching valve according to a third modification from which a trunk portion and a valve chamber forming wall of a valve body are removed.
FIG. 10 is a perspective view of a valve element illustrated in FIG. 9.
FIG. 11 is a perspective view of a seal member illustrated in FIG. 9.
FIG. 12 is a diagram illustrating a first state of a valve element and a flow direction of a refrigerant in a flow path switching valve, which is applied as a four-way switching valve, during a cooling operation.
FIG. 13 is a diagram illustrating a second state of the valve element and the flow direction of the refrigerant in the flow path switching valve, which is applied as a four-way switching valve, during a heating operation.
FIG. 14 is another diagram illustrating the first state of the valve element and the flow direction of the refrigerant in the flow path switching valve, which is applied as a four-way switching valve, during the cooling operation.
FIG. 15 is another diagram illustrating the second state of the valve element and the flow direction of the refrigerant in the flow path switching valve, which is applied as a four-way switching valve, during the heating operation.

### DESCRIPTION OF EMBODIMENTS

### (1) Outline of air conditioning apparatus including flow path switching valve 100

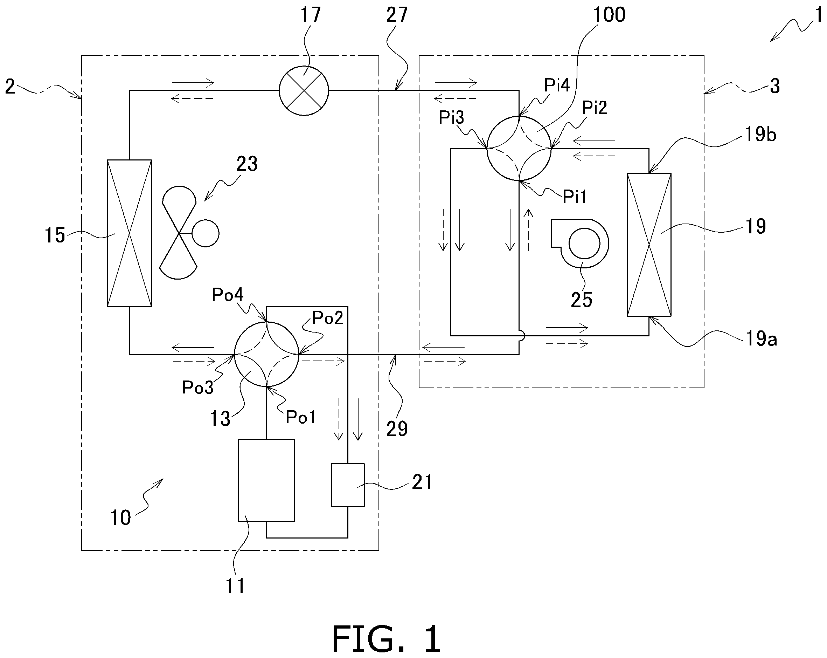

FIG. 1 is a configuration diagram of an air conditioning apparatus 1 including a flow path switching valve 100 according to the present disclosure. The air conditioning apparatus 1 illustrated in FIG. 1 is configured to cool and heat air in a room. The air conditioning apparatus 1 includes an outdoor unit 2 placed outside the room, and an indoor unit 3 placed in the room.

The outdoor unit 2 and the indoor unit 3 are connected to each other by two connection pipes 27 and 29. The air conditioning apparatus 1 thus includes a refrigerant circuit 10. The refrigerant circuit 10 is filled with a refrigerant and achieves a vapor compression refrigeration cycle in such a way that the refrigerant circulates through the refrigerant circuit 10.

In the present embodiment, the indoor unit 3 includes the flow path switching valve 100, and the refrigerant flows through an indoor heat exchanger 19 in the same direction regardless of which one of the cooling operation and the heating operation. Moreover, the indoor heat exchanger 19 has a refrigerant pass through which the refrigerant flows in the opposite direction to the direction in which air to be supplied to the indoor heat exchanger 19 flows.

### (1-1) Cooling operation

During the cooling operation, a four-way switching valve 13 and the flow path switching valve 100 are in a state indicated by a solid line in FIG. 1. The high-pressure refrigerant, which has been compressed in a compressor 11, flows into an outdoor heat exchanger 15 via a first port Po1 and a third port Po3 of the four-way switching valve 13.

In the outdoor heat exchanger 15, the high-pressure refrigerant condenses by heat exchange with outdoor air supplied by an outdoor fan 23. The refrigerant, which has condensed in the outdoor heat exchanger 15, is then decompressed in an outdoor expansion valve 17. Thereafter, the refrigerant flows through a fourth port Pi4 and a third port Pi3 of the flow path switching valve 100, and then flows into the indoor heat exchanger 19 through an inlet 19a.

In the indoor heat exchanger 19, the refrigerant exchanges heat with indoor air supplied by an indoor fan 25, and evaporates by absorbing heat from the indoor air. The air is cooled by the indoor heat exchanger 19 and supplied into an indoor space.

The refrigerant, which has evaporated in the indoor heat exchanger 19, flows out of the indoor heat exchanger 19 through an outlet 19b, and then reaches the four-way switching valve 13 via a second port Pi2 and a first port Pi1 of the flow path switching valve 100. Moreover, the refrigerant is sucked into the compressor 11 via a second port Po2 and a fourth port Po4 of the four-way switching valve 13 as well as the accumulator 21, and is compressed again in the compressor 11.

### (1-2) Heating operation

During the heating operation, the four-way switching valve 13 and the flow path switching valve 100 are in a state indicated by a broken line in FIG. 1. The high-pressure refrigerant, which has been compressed in the compressor 11, reaches the flow path switching valve 100 via the first port Po1 and the second port Po2 of the four-way switching valve 13.

Thereafter, the refrigerant flows through the first port Pi1 and the third port Pi3 of the flow path switching valve 100, and then flows into the indoor heat exchanger 19 through the inlet 19a. In the indoor heat exchanger 19, the refrigerant exchanges heat with indoor air supplied by the indoor fan 25, and condenses by radiating heat. The air is heated by the indoor heat exchanger 19 and supplied into the indoor space.

The refrigerant, which has condensed in the indoor heat exchanger 19, flows out of the indoor heat exchanger 19 through the outlet 19b, and then reaches the outdoor expansion valve 17 via the second port Pi2 and the fourth port Pi4 of the flow path switching valve 100. The refrigerant, which has been decompressed in the outdoor expansion valve 17, then flows into the outdoor heat exchanger 15.

In the outdoor heat exchanger 15, the refrigerant exchanges heat with outdoor air supplied by the outdoor fan 23, and evaporates by absorbing heat from the outdoor air. Thereafter, the refrigerant is sucked into the compressor 11 via the third port Po3 and the fourth port Po4 of the four-way switching valve 13 as well as the accumulator 21, and is compressed again in the compressor 11.

As described above, according to the present embodiment, the flow path switching valve 100 switches between the refrigerant flow path during the cooling operation and the refrigerant flow path during the heating operation. Therefore, the refrigerant flows through the indoor heat exchanger 19 in the same flow direction regardless of which one of the cooling operation and the heating operation.

### (2) Specific structure of flow path switching valve 100

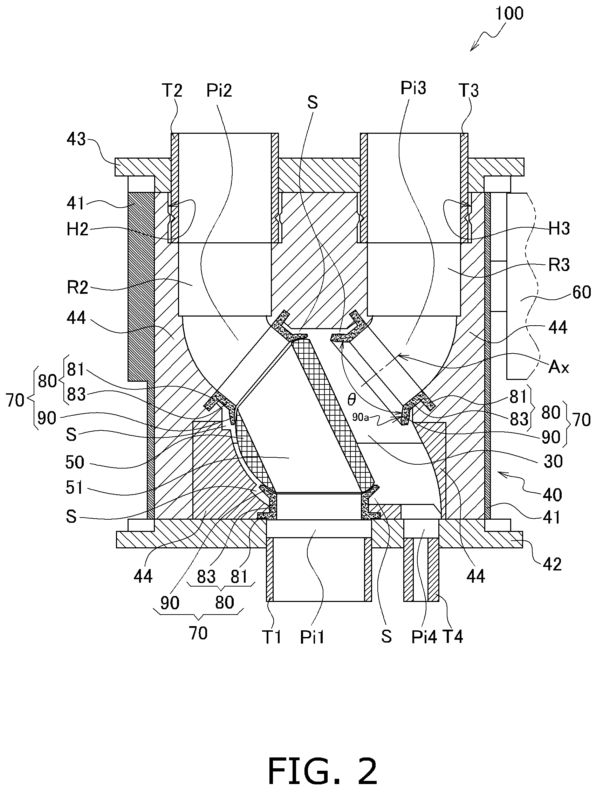

FIG. 2 is a longitudinal sectional view of the flow path switching valve 100. As illustrated in FIG. 2, the flow path switching valve 100 includes a valve body 40, a valve element 50, a driver unit 60, and a seal member 70.

### (2-1) Valve body 40

The valve body 40 includes a trunk portion 41 having a tubular shape, a first end plate 42 closing a first end of the trunk portion 41, a second end plate 43 closing a second end of the trunk portion 41, and a valve chamber forming wall 44. The trunk portion 41, the first end plate 42, and the second end plate 43 form as an outer wall of the valve body 40, and the valve chamber forming wall 44 form as an inner wall of the valve body 40.

### (2-1-1) Trunk portion 41

The trunk portion 41 is a metal member having a cylindrical shape. The trunk portion 41 accommodates therein the valve chamber forming wall 44, the valve element 50, a gear mechanism of the driver unit 60, and the seal member 70.

### (2-1-2) First end plate 42

As illustrated in FIG. 2, the first end plate 42 is a metal member having a plate shape and closing a lower end of the trunk portion 41 in front view. The first end plate 42 has the first port Pi1 and the fourth port Pi4 each forming as a refrigerant flow port. The first port Pi1 and the fourth port Pi4 are each a round hole extending through the first end plate 42 and leading to a valve chamber 30.

A first copper pipe T1 is inserted in the first port Pi1. The first copper pipe T1 is inserted in the first port Pi1 by a length corresponding to a quarter to a half of a thickness of the first end plate 42. Likewise, a fourth copper pipe T4 is inserted in the fourth port Pi4. The fourth copper pipe T4 is inserted in the fourth port Pi4 by a length corresponding to a quarter to a half of the thickness of the first end plate 42.

### (2-1-3) Second end plate 43

As illustrated in FIG. 2, the second end plate 43 is a metal member having a plate shape and closing an upper end of the trunk portion 41 in front view. The second end plate 43 has two round through holes in advance. The second end plate 43 fixes a second copper pipe T2 and a third copper pipe T3 with the second copper pipe T2 and the third copper pipe T3 respectively extending through the round through holes. The second copper pipe T2 and the third copper pipe T3 have an each end reaching the interior of the trunk portion 41.

### (2-1-4) Valve chamber forming wall 44

The valve chamber forming wall 44 is a synthetic resin member. The valve chamber forming wall 44 forms, within the trunk portion 41, the valve chamber 30 as a space where the valve element 50 is movable, as well as the second port Pi2 and the third port Pi3 leading to the valve chamber 30. The second port Pi2 and the third port Pi3 are each a round hole. The second port Pi2 and the third port Pi3 leading to the valve chamber 30.

The valve chamber forming wall 44 also forms a pipe hole H2 in which the second copper pipe T2 is fitted, a pipe hole H3 in which the third copper pipe T3 is fitted, a flow path R2 connecting the pipe hole H2 and the second port Pi2, and a flow path R3 connecting the pipe hole H3 and the third port Pi3.

### (2-2) Valve element 50

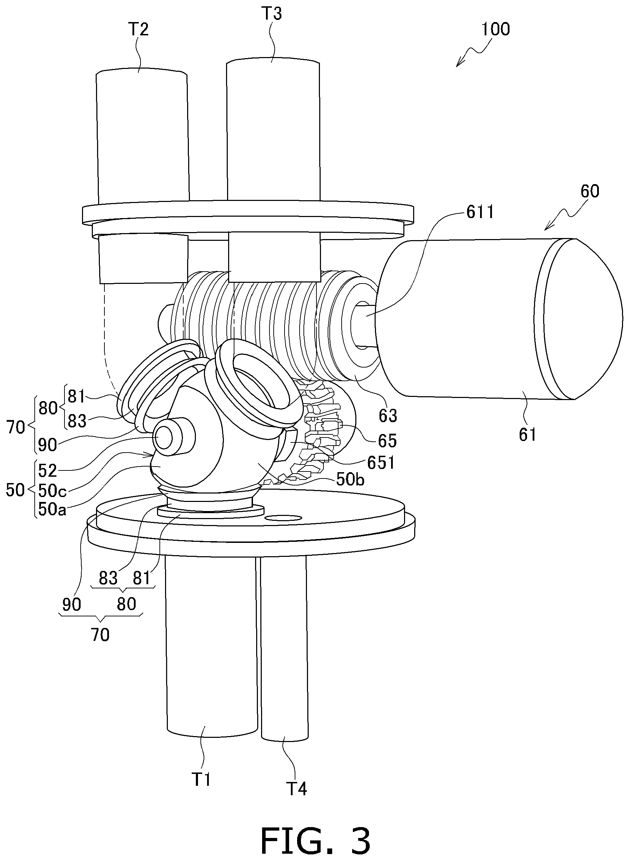

FIG. 3 is an internal perspective view of the flow path switching valve 100 from which the trunk portion 41 and valve chamber forming wall 44 of the valve body 40 are removed. As illustrated in FIGS. 2 and 3, the valve element 50 is obtained from a sphere processed into a predetermined shape. Specifically, the sphere is cut along planes perpendicular to a center axis, at two points equidistant from the center of the sphere in opposite directions along the center axis, so that a wheel-shaped member is formed.

Thereafter, this wheel-shaped member is cut along a plane parallel to the center axis so as to have a D-shaped cross section.

Therefore, the valve element 50 has, as outer surfaces, two side surfaces 50a perpendicular to the center axis, a spherical surface 50b between the two side surfaces 50a, and an inclined surface 50c perpendicular to the two side surfaces 50a and opposite to the spherical surface 50b.

A pivot shaft 52 protrudes from one of the side surfaces 50a in a direction perpendicular to this side surface 50a while a shaft 651 of a pinion gear 65 is coupled to the other side surface 50a. The pivot shaft 52 is rotatably supported by the valve chamber forming wall 44, and the valve element 50 pivots in response to the rotation of the pinion gear 65.

As illustrated in FIG. 2, the valve element 50 has a first passage 51 having a circular tunnel shape and extending through the valve element 50. A communication state of the valve element 50 between the first passage 51 and each port is switched to a first state during the cooling operation and to a second state during the heating operation.

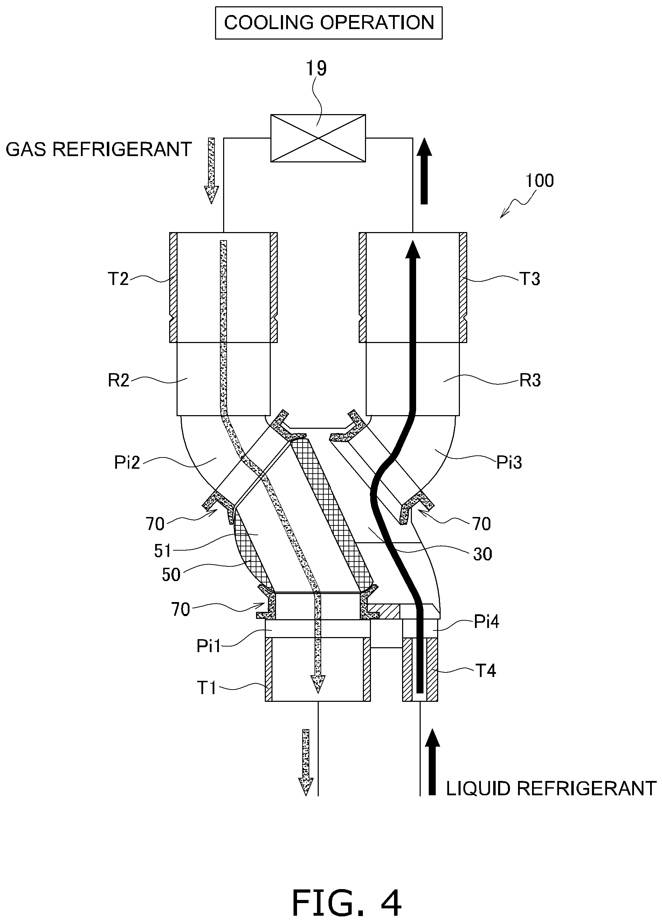

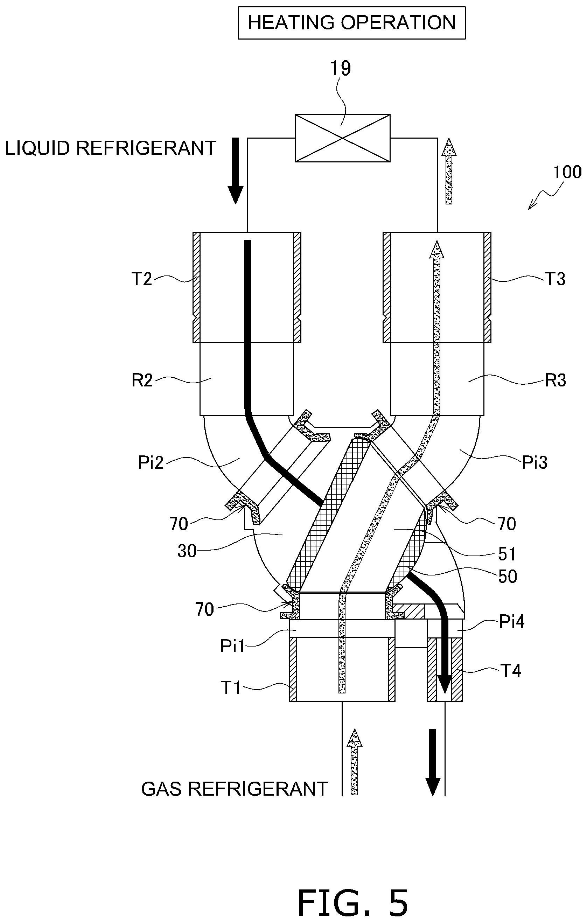

FIG. 4 is a diagram illustrating the first state of the valve element 50 and the flow direction of the refrigerant in the flow path switching valve 100 during the cooling operation. FIG. 5 is a diagram illustrating the second state of the valve element 50 and the flow direction of the refrigerant in the flow path switching valve 100 during the heating operation.

### (2-2-1) First state of valve element 50

As illustrated in FIG. 4, in the first state during the cooling operation, the first passage 51 causes the first port Pi1 and the second port Pi2 to communicate with each other, and the valve chamber 30 causes the third port Pi3 and the fourth port Pi4 to communicate with each other. In the first state, the liquid refrigerant, which has been decompressed in the outdoor expansion valve 17, flows through the fourth port Pi4, the valve chamber 30, and the third port Pi3 in this order, and then evaporates in the indoor heat exchanger 19. After flowing out of the indoor heat exchanger 19, the gas refrigerant flows through the second port Pi2, the first passage 51, and the first port Pi1 in this order, and then flows out of the flow path switching valve 100.

### (2-2-2) Second state of valve element 50

As illustrated in FIG. 5, in the second state during the heating operation, the first passage 51 causes the first port Pi1 and the third port Pi3 to communicate with each other, and the valve chamber 30 causes the second port Pi2 and the fourth port Pi4 to communicate with each other. In the second state, the gas refrigerant, which has been discharged from the compressor 11, flows through the first port Pi1, the first passage 51, and the third port Pi3 in this order, and then condenses in the indoor heat exchanger 19. After flowing out of the indoor heat exchanger 19, the liquid refrigerant flows through the second port Pi2, the valve chamber 30, and the fourth port Pi4 in this order, and then flows out of the flow path switching valve 100.

### (2-3) Driver unit 60

As illustrated in FIG. 3, the driver unit 60 includes a motor 61, a worm gear 63, and the pinion gear 65. The present embodiment adopts, as the motor 61, a stepping motor capable of adjusting a rotation angle by pulse control. The motor 61 has an output shaft 611 concentrically coupled to a shaft of the worm gear 63.

The worm gear 63 meshes with the pinion gear 65. The shaft 651 of the pinion gear 65 is concentrically coupled to a shaft of the valve element 50. The rotation of the motor 61 is decelerated in accordance with a gear ratio between the worm gear 63 and the pinion gear 65, and is transmitted to the valve element 50. Therefore, the valve element 50 can be driven with torque lower than torque required when the valve element 50 is directly driven using the motor 61.

### (2-4) Seal member 70

The seal member 70 seals an interface between the valve element 50 and one of the first port Pi1, the second port Pi2, and the third port Pi3 communicating with the first passage 51 of the valve element 50.

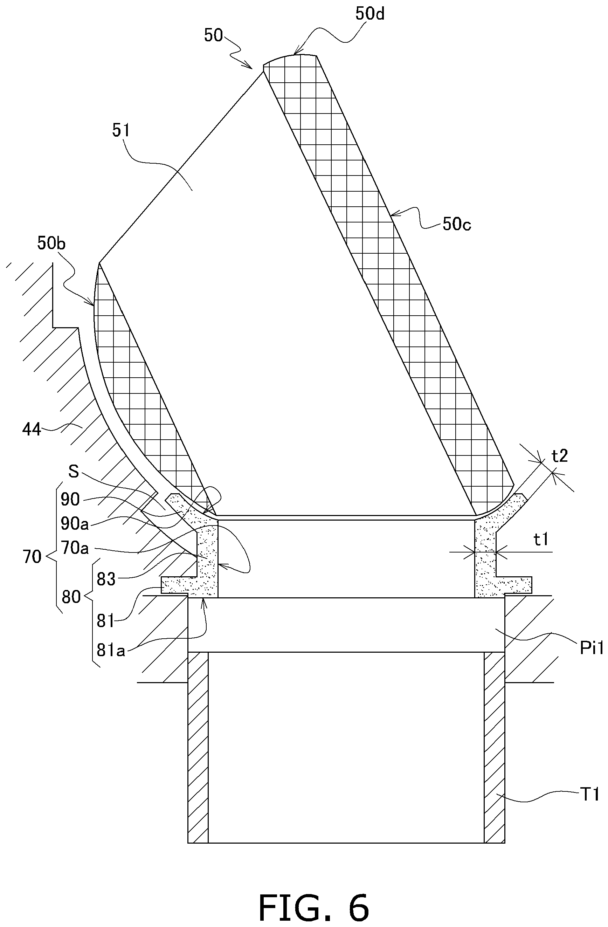

FIG. 6 is an enlarged sectional view of the first port Pi1, the valve element 50, and the seal member 70 that seals an interface between the first port Pi1 and the valve element 50. The seal member 70 mounted to the first port Pi1 is slightly different from, but principally equal to the seal members 70 mounted to the second port Pi2 and third port Pi3; therefore, a description herein is given of the seal member 70 mounted to the first port Pi1.

As illustrated in FIG. 6, the seal member 70 is a synthetic resin member, and includes a base portion 80 and an extended portion 90. The seal member 70 has a through hole 70a extending through the base portion 80 and the extended portion 90. The extended portion 90 is extended so as to open from the base portion 80 toward the valve element 50 so that the seal member 70 has a bowl-shaped cross section.

### (2-4-1) Base portion 80

The base portion 80 includes a connection portion 81 and a shaft portion 83. The connection portion 81 and a part of the shaft portion 83 are fixed by the valve chamber forming wall 44. The connection portion 81 has a disc shape and is in close contact with a circumferential edge of the first port Pi1. The connection portion 81 has a protrusion 81a fitted in the first port Pi1, and the protrusion 81a is used for positioning. However, if there is another positioning method, the protrusion 81a is unnecessary, and the seal members 70, which are in close contact with the second port Pi2 and the third port Pi3, each have no protrusion 81a.

The shaft portion 83 has a cylindrical shape, perpendicularly extends from the connection portion 81, and connects the connection portion 81 and the extended portion 90. The shaft portion 83 is smaller in outer peripheral diameter than the connection portion 81. The shaft portion 83 has a thickness set to "t1" corresponding to a difference between an inner peripheral surface and an outer peripheral surface of the shaft portion 83.

### (2-4-2) Extended portion 90

The extended portion 90 has an extended surface 90a the diameter of which gradually increases from a terminal end of the shaft portion 83 toward the valve element 50. The extended surface 90a is a tapered surface or a curved surface. The extended portion 90 has a thickness that gradually decreases from its proximal end toward its distal end so that a thickness t2 at the distal end is smaller than the thickness t1 of the shaft portion 83.

As illustrated in FIG. 2, moreover, the extended portion 90 has a V-shaped cross section when the extended portion 90 is cut along an imaginary plane including a center axis Ax in the refrigerant flow direction. The degree that the extended portion 90 is opened in the V shape corresponds to the maximum opposite angle across the extended surface 90a and is referred to as an "open angle θ" herein. In a case where the extended portion 90 is not in contact with the valve element 50, the open angle θ of the extended portion 90 is set within a range from 60° to 120°. However, the open angle θ in a case where the extended portion 90 is in contact with the valve element 50 is larger than the open angle θ in the case where the extended portion 90 is not in contact with the valve element 50.

A space S is provided between the extended portion 90 and the base portion 80, which does not hinder a bend of the extended portion 90 even when the valve element 50 is pressed against the extended portion 90. The space S may alternatively be a clearance between the extended portion 90 and the valve chamber forming wall 44. In this case, the dimension of the clearance may be set in consideration of a bending amount of the extended portion 90 based on an elastic modulus of the extended portion 90.

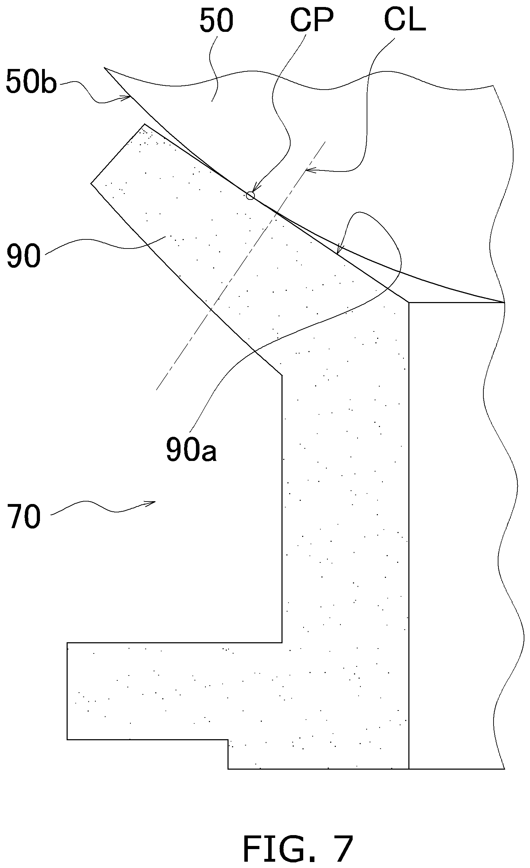

FIG. 7 is a partial sectional view of the seal member 70, which illustrates a position of a contact point CP between the spherical surface 50b of the valve element 50 and the extended surface 90a of the seal member 70. In FIG. 7, a centerline CL corresponds to a normal line of the extended surface 90a passing through a center of the extended surface 90a.

However, if the extended surface 90a has a chamfered distal end or has a fillet, the centerline CL corresponds to a normal line of the extended surface 90a passing through a center of a region of the extended surface 90a from which the chamfered portion or the fillet is excluded.

Since the extended portion 90 is extended so as to open from the base portion 80 toward the valve element 50 and is molded such that the thickness decreases from the proximal end toward the distal end, the distal end bends with ease compared to the proximal end and exhibits good followability to the displacement of the valve element 50.

However, when the refrigerant flows through the first passage 51, the valve element 50 receives a pressure, so that the valve element 50 is pressed against the extended portion 90. As a result, there is a high possibility that the contact point CP between the valve element 50 and the extended portion 90 is shifted toward the proximal end of the extended portion 90.

It is therefore necessary to restrain the contact point CP between the valve element 50 and the extended portion 90 from being shifted to an area between the center of the extended portion 90 and the proximal end of the extended portion 90. According to the present embodiment, hence, in a state in which no refrigerant flows through the first passage 51 of the valve element 50, the contact point CP between the spherical surface 50b and the extended surface 90a is set to be located between the centerline CL and the distal end of the extended surface 90a. Thus, even when the valve element 50 is pressed against the extended portion 90, the contact point CP between the valve element 50 and the extended portion 90 is hardly shifted to an area between the center and the proximal end of the extended portion 90.

### (3) Features

(3-1)
If a conventional ball valve (see Patent Literature 1: JP S64-058874 A) is applied as a flow path switching valve having flow paths extending in multiple directions, a resultant force of a differential pressure is applied diagonally, rather than perpendicularly, to a tapered surface of a seal member. Consequently, there is a risk that a valve element is separated from the tapered surface. In addition, since the valve element is configured not to separate from the seal member, it has the disadvantage that the conventional ball valve cannot be applied to such a valve structure that a valve element is completely separated from a seal member in switching a flow path.

In contrast to this, the extended portion 90 of the flow path switching valve 100 according to the present embodiment is configured to contact with the valve element 50 while being biased toward the valve element 50 in the communication state. Therefore, the valve element 50 is brought into close contact with the extended portion 90 of the seal member 70 so as to push and open the extended portion 90. Thus, even when the valve element 50 is shifted, the extended portion 90 follows the direction valve element 50 shifted, so that the extended portion 90 is not separated from the valve element 50. In addition, the extended portion 90 of the flow path switching valve 100 according to the present embodiment is also applicable to such a valve structure that the valve element 50 is separated from a certain seal member 70 and is brought into contact with a seal member 70 for another flow path.

(3-2)
The space S is provided to allow the bend of the extended portion 90, and the flow path switching valve 100 has no obstacle that hinders the bend of the extended portion 90. Moreover, the space S is located between the base portion 80 and the extended portion 90, and the extended portion 90 bends with respect to the base portion 80. Therefore, even when the valve element 50 is displaced to push the extended portion 90 due to fluctuations in refrigerant pressure, the extended portion 90 can follow this displacement.

(3-3)
The open angle θ of the extended portion 90 which is in contact with the valve element 50 is larger than the open angle θ of the extended portion 90 which is not in contact with the valve element 50. Although the open angle θ increases due to the contact of the extended portion 90 with the valve element 50, drag from the extended portion 90 to the valve element 50 increases as a reaction, which brings the extended portion 90 into contact with the valve element 50 more closely. This results in improvement of sealability between the valve element 50 and the extended portion 90.

(3-4)
In the flow path switching valve 100, the valve element 50 is in contact with an area between the center and the distal end of the extended portion 90 in a no-load state in which no refrigerant flows through the first passage 51 of the valve element 50. Since the extended portion 90 is configured to extend so as to open from the base portion 80 toward the valve element 50, the distal end of the extended portion 90 bends with ease compared to the proximal end of the extended portion 90, so that the extended portion 90 follows the displacement of the valve element 50 with ease. However, there is a high possibility that the contact point between the valve element 50 and the extended portion 90 is shifted from the distal end toward the proximal end if the valve element 50 receives a pressure and accordingly pushes the extended portion 90. Therefore, the valve element 50 is previously set to come into contact with an area between the center and the distal end of the extended portion 90 in order to restrain the contact point between the valve element 50 and the extended portion 90 from being shifted to the area between the center and the proximal end.

(3-5)
The base portion 80 includes the connection portion 81 and the shaft portion 83. The connection portion 81 has a ring shape and is in contact with the corresponding port. The shaft portion 83 has a tubular shape and connects the connection portion 81 and the extended portion 90. The shaft portion 83 is larger in thickness than the distal end of the extended portion 90.

According to the flow path switching valve 100, the valve element 50 pushes and opens the extended portion 90 when the valve element 50 is switched from a state in which the valve element 50 is separated from the extended portion 90 to a state in which the valve element 50 is in contact with the extended portion 90. If the thickness of the shaft portion 83 is smaller than the thickness of the distal end of the extended portion 90, the shaft portion 83 becomes deformed first due to a force which the valve element 50 applies to the extended portion 90, so that the sealability between the valve element 50 and the extended portion 90 may be weakened.

Therefore, the thickness of the shaft portion 83 is made larger than the thickness of the distal end of the extended portion 90, and the distal end of the extended portion 90 becomes deformed with ease upon reception of a force from the valve element 50. As a result, the sealability between the valve element 50 and the extended portion 90 can be secured stably.

(3-6)
The valve body 40 include the first port Pi1, the second port Pi2, and the third port Pi3 as ports. The driver unit 60 drives the valve element 50 to switch the communication state to one of the first state and the second state. In the first state, the first passage 51 causes the first port Pi1 and the second port Pi2 to communicate with each other. In the second state, the first passage 51 causes the first port Pi1 and the third port Pi3 to communicate with each other.

The flow path switching valve 100 can be used as a four-way switching valve by additionally providing a port connectable to the second port Pi2 after the communication state is switched from the first state to the second state and a port connectable to the third port Pi3 after the communication state is switched from the second state to the first state.

(3-7)
Since the driver unit 60 rotates the valve element 50 to switch between the first state and the second state, the flow path switching valve 100 can be made smaller in size than a flow path switching valve configured to switch a flow path by moving a valve element linearly.

(3-8)
Since the seal member 70 is made of a synthetic resin, the seal member 70 is smaller in elastic modulus than a seal member made of a metal, and bends with ease. Therefore, the seal member 70 exhibits good followability to the displacement of the valve element 50.

(3-9)
The open angle θ of the extended portion 90 which is not in contact with the valve element 50 is within the range from 60° to 120°.

(3-10)
The seal member 70 and the corresponding port may be molded integrally. This configuration contributes to a reduction in parts count, and is therefore advantageous for a flow path switching valve having a large number of ports.

(3-11)
The seal member 70 and the corresponding port may be molded separately. In a case where each of the ports have different shapes, it is more advantageous to make the seal member 70 and the ports separate, standardizing only the seal member 70.

(3-12)
The first passage 51 is a circular tunnel-shaped passage extending through the valve element 50.

(3-13)
According to the indoor unit 3, the flow path switching valve 100 allows the refrigerant to flow through the indoor heat exchanger 19 in the same direction regardless of which one of the cooling operation and the heating operation.

(3-14)
According to the outdoor unit 2, the flow path switching valve 100 serving as a four-way switching valve reduces mechanical noise compared to a conventional four-way switching valve configured to drive a valve element based on a pressure difference.

### (4) Modifications

Herein, modifications of that modifies part of the foregoing embodiment are described.

### (4-1) First modification

The foregoing embodiment has been described on the assumption that the second port Pi2 and the third port Pi3 are molded integrally with the valve chamber forming wall 44 while the second port Pi2 and the third port Pi3 are molded separately from the corresponding seal members 70.

However, if the valve chamber forming wall 44 and the seal members 70 are molded using the same synthetic resin, the second port Pi2 and the third port Pi3 may be molded integrally with the corresponding seal members 70 in molding the valve chamber forming wall 44. The synthetic resin is desirably a polyacetal resin widely used as a resin spring material.

However, the first port Pi1 is formed in the metal first end plate 42, so that the first port Pi1 and the corresponding seal member 70 are made of different materials. It is therefore reasonable to form the first port Pi1 and the corresponding seal member 70 separately from each other as described in the foregoing embodiment.

### (4-2) Second modification

In the foregoing embodiment, since the spherical surface 50b of the valve element 50 is brought into contact with the extended portion 90 of the seal member 70, the extended surface 90a of the extended portion 90 is a conical surface or a spherical surface. However, the valve element does not necessarily have a spherical surface, and the extended surface is not necessarily a conical surface or a spherical surface.

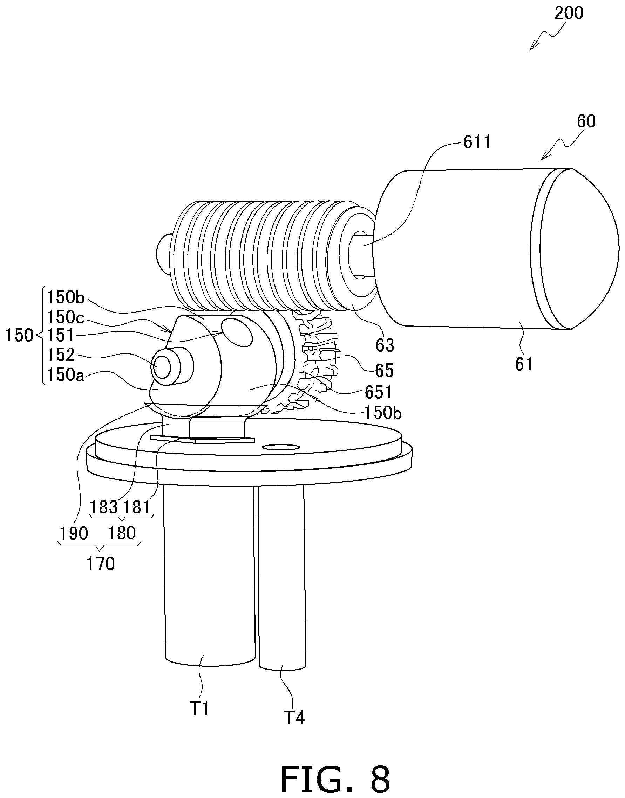

FIG. 8 is a perspective view of a valve element 150, a seal member 170, and their peripheries in a flow path switching valve 200 according to a second modification. The flow path switching valve 200 according to the second modification is equal in configuration to the flow path switching valve 100 according to the foregoing embodiment except the valve element 150 and the seal member 170. Therefore, only the valve element 150 and the seal member 170 are described hereinafter.

### (4-2-1) Valve element 150

As illustrated in FIG. 8, the valve element 150 has a D-shaped cross section like a circular column which has two side surfaces perpendicular to a center axis and is cut along a plane parallel to the center axis.

Therefore, the valve element 150 has, as outer surfaces, two side surfaces 150a perpendicular to the center axis, a circumferential surface 150b between the two side surfaces 150a, and an inclined surface 150c perpendicular to the two side surfaces 150a and opposite to the circumferential surface 150b.

A pivot shaft 152 protrudes from one of the side surfaces 150a in a direction perpendicular to this side surface 150a while a shaft 651 of a pinion gear 65 is coupled to the other side surface 150a. The pivot shaft 152 is rotatably supported by a valve chamber forming wall 44, and the valve element 150 pivots in response to the rotation of the pinion gear 65.

The valve element 150 has a first passage 151 extending through the valve element 150. The first passage 151 is similar to the first passage 51 described in the foregoing embodiment with reference to FIG. 2. The valve element 150 switches a communication state between the first passage 151 and each port to a first state during a cooling operation and to a second state during a heating operation. The first state is similar to that illustrated in FIG. 4, and the second state is similar to that illustrated in FIG. 5. Therefore, the description will be omitted.

### (4-2-2) Seal member 170

The seal member 170 includes a base portion 180 and an extended portion 190. The base portion 180 includes a connection portion 181 and a shaft portion 183. The connection portion 181 has a rectangular plate shape. The shaft portion 183 has a prismatic tubular shape, perpendicularly extends from the connection portion 181, and connects the connection portion 181 and the extended portion 190. The shaft portion 183 is smaller in outer dimension than the connection portion 181. The connection portion 181 and the shaft portion 183 produce the same operation and effect as those of the connection portion 81 and the shaft portion 83 according to the foregoing embodiment. Therefore, the description will be omitted hereinafter.

The extended portion 190 has a rectangular cross section in plan view. The extended portion 190 has a longer-side dimension that is fixed, and a shorter-side dimension that gradually increases toward the valve element 150. Therefore, a cross section cut along a plane perpendicular to the longer side of the extended portion 190 is extended to open toward the valve element 150.

The extended portion 190 is in close contact with the two side surfaces 150a and the circumferential surface 150b so as to surround a flow port of the first passage 151, which prevents the refrigerant flowing through the first passage 151 from leaking from the flow port of the first passage 151 toward the valve chamber 30.

### (4-3) Third modification

In the foregoing embodiment, the first passage 51 of the valve element 50 is a circular tunnel-shaped hole extending through the valve element 50. However, the first passage 51 is not limited to a hole, and may be a groove.

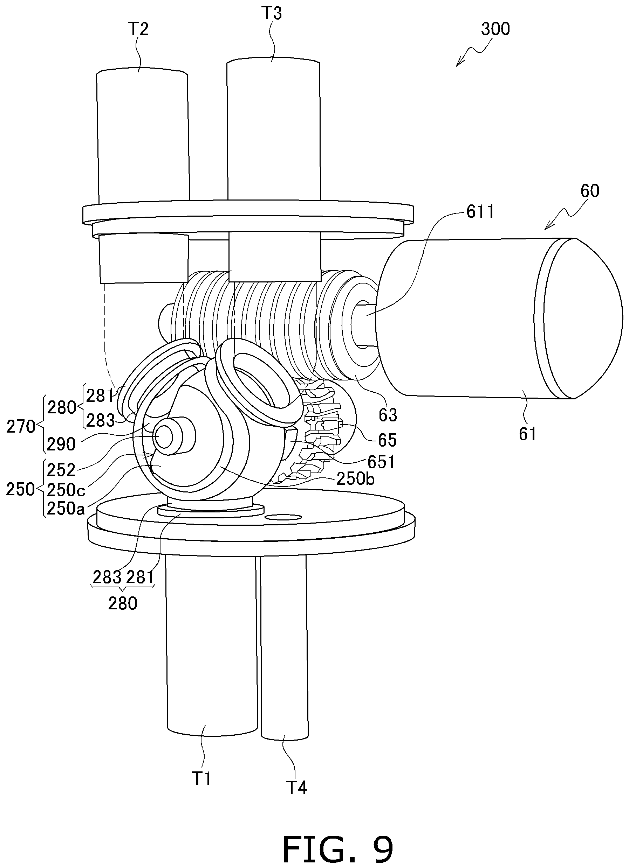

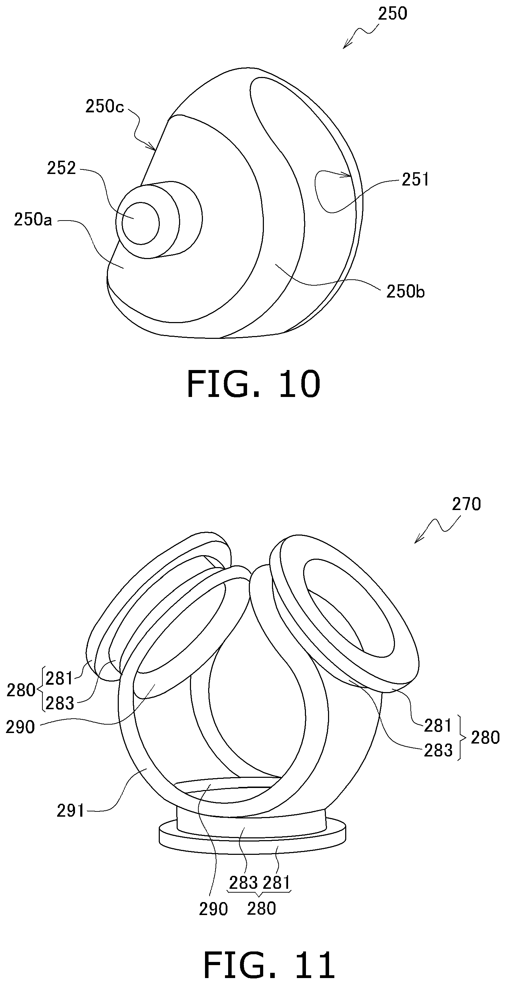

FIG. 9 is an internal perspective view of a flow path switching valve 300 according to a third modification from which a trunk portion and a valve chamber forming wall of a valve body are removed. FIG. 10 is a perspective view of a valve element 250 illustrated in FIG. 9. FIG. 11 is a perspective view of a seal member 270 illustrated in FIG. 9. The flow path switching valve 300 according to the third modification is equal in configuration to the flow path switching valve 100 according to the foregoing embodiment except the valve element 250 and the seal member 270. Therefore, only the valve element 250 and the seal member 270 are described hereinafter.

### (4-3-1) Valve element 250

As illustrated in FIGS. 9 and 10, the valve element 250 is obtained from a sphere processed into a predetermined shape. Specifically, the sphere is cut along planes perpendicular to a center axis, at two points equidistant from the center of the sphere in opposite directions along the center axis, so that a wheel-shaped member is formed. Thereafter, this wheel-shaped member is cut along a plane parallel to the center axis so as to have a D-shaped cross section.

Therefore, the valve element 250 has, as outer surfaces, two side surfaces 250a perpendicular to the center axis, a spherical surface 250b between the two side surfaces 250a, and an inclined surface 250c perpendicular to the two side surfaces 250a and opposite to the spherical surface 250b.

A pivot shaft 252 protrudes from one of the side surfaces 250a in a direction perpendicular to this side surface 250a while a shaft 651 of a pinion gear 65 is coupled to the other side surface 250a. The pivot shaft 252 is rotatably supported by a valve chamber forming wall 44, and the valve element 250 pivots in response to the rotation of the pinion gear 65.

As illustrated in FIG. 10, a groove-shaped cutout serving as a groove-shaped first passage 251 is formed in the spherical surface 250b side of the valve element 250 along the inclined surface 250c. Therefore, the groove-shaped first passage 251 has an edge surrounded by the spherical surface 250b.

### (4-3-2) Seal member 270

As illustrated in FIGS. 10 and 11, the seal member 270 includes three base portions 280, three extended portions 290, and a seal belt 291 connecting the three extended portions 290.

The base portions 280 each include a connection portion 281 and a shaft portion 283. The connection portions 281 and the shaft portions 283 have the same functions as those of the connection portion 81 and the shaft portion 83 according to the foregoing embodiment, and the extended portions 290 have the same function as that of the extended portion 90 according to the foregoing embodiment. Therefore, the description of these portions will be omitted hereinafter.

The seal belt 291 is in close contact with the spherical surface 250b so as to surround an opening and an edge of the groove-shaped first passage 251 of the valve element 250, which prevents a refrigerant flowing through the groove-shaped first passage 251 from leaking from the edge of the first passage 251 toward the valve chamber 30.

### (5) Application of flow path switching valve as four-way switching valve

In the foregoing embodiment, the flow path switching valve 100 is provided for causing the refrigerant to flow from the inlet 19a of the indoor heat exchanger 19 toward the outlet 19b of the indoor heat exchanger 19 regardless of which one of the cooling operation and the heating operation. Therefore, the low-pressure refrigerant flows through the flow path switching valve 100 during the cooling operation whereas the high-pressure refrigerant flows through the flow path switching valve 100 during the heating operation. In addition, since the liquid refrigerant flows through the fourth port Pi4, the port diameter of the fourth port Pi4 is set to be smaller than the port diameters of the first port Pi1, second port Pi2, and third port Pi3.

If the flow path switching valve 100 is applied as a four-way switching valve, the gas refrigerant flows into and out of the flow path switching valve 100. It is therefore desirable that the diameter of the fourth port Pi4 is set to be equal to the diameters of the first port Pi1, second port Pi2, and third port Pi3.

### (5-1) Case where refrigerant pressure within valve element 50 becomes higher than pressure around valve element 50

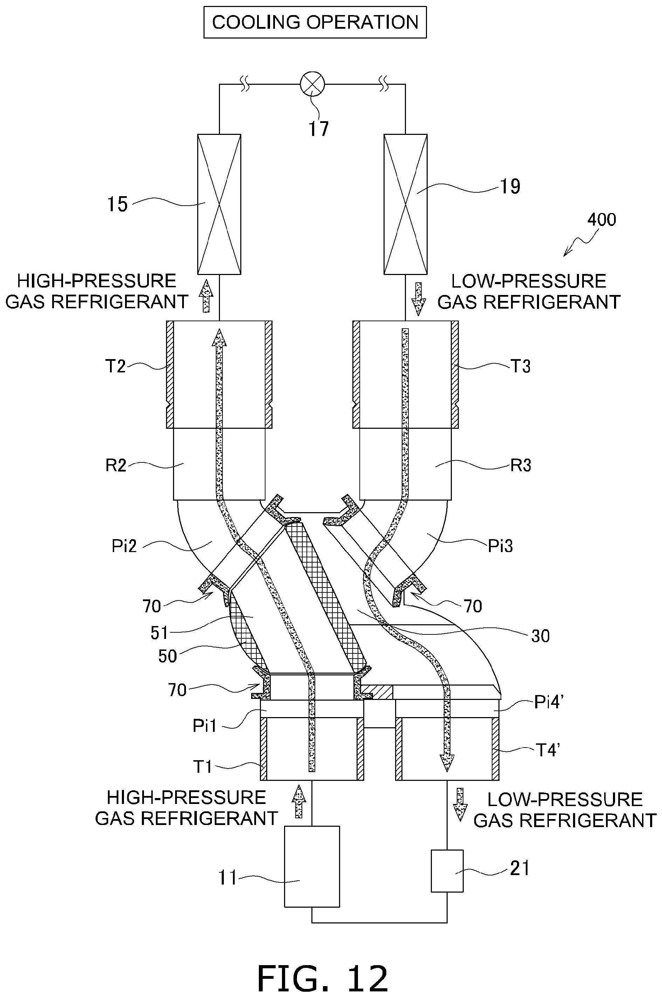

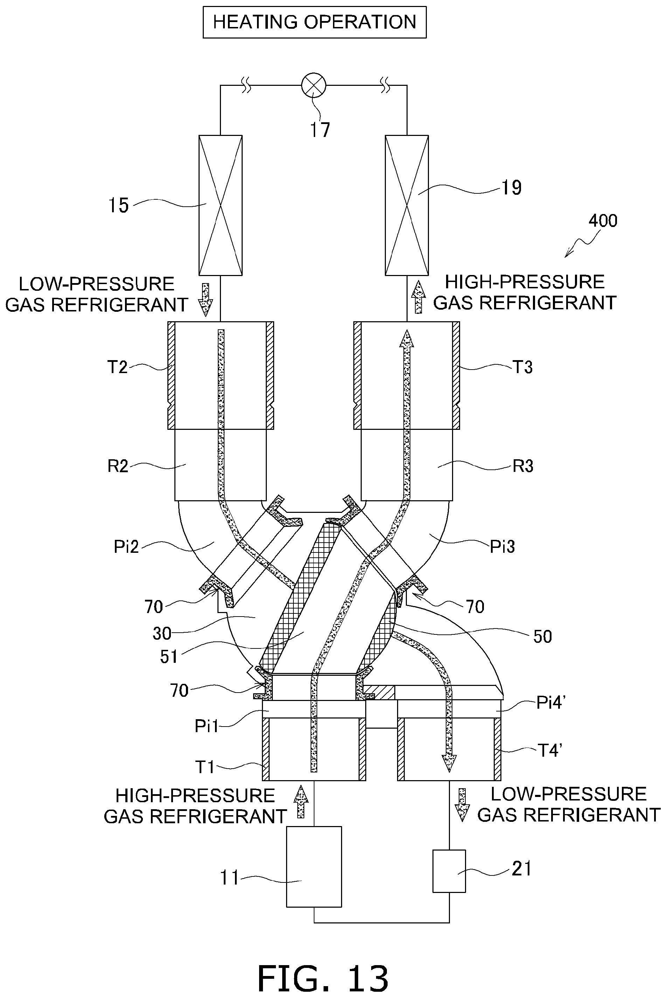

FIG. 12 is a diagram illustrating a first state of a valve element 50 and a flow direction of a refrigerant in a flow path switching valve 400, which is applied as a four-way switching valve, during a cooling operation. FIG. 13 is a diagram illustrating a second state of the valve element 50 and the flow direction of the refrigerant in the flow path switching valve 400, which is applied as a four-way switching valve, during a heating operation.

As illustrated in FIGS. 12 and 13, in the flow path switching valve 400, a fourth port Pi4´ in diameter sets to be equal in port diameter to a first port Pi1, a second port Pi2, and a third port Pi3. Accordingly, a fourth copper pipe T4´ in diameter sets to be equal in diameter to a first copper pipe T1, a second copper pipe T2, and a third copper pipe T3.

The first copper pipe T1 is connected to the discharge side of a compressor 11, and the fourth copper pipe T4´ is connected to the suction side of the compressor 11 via an accumulator 21. The second copper pipe T2 is connected to an outdoor heat exchanger 15, and the third copper pipe T3 is connected to an indoor heat exchanger 19.

### (5-1-1) Flow path switching valve 400 during cooling operation

As illustrated in FIG. 12, during the cooling operation, the valve element 50 is in the first state in which a first passage 51 causes the first port Pi1 and the second port Pi2 to communicate with each other.

The high-pressure gas refrigerant, which has been discharged from the compressor 11, flows into the flow path switching valve 400, flows through the first port Pi1, the first passage 51, and the second port Pi2, and then flows out of the flow path switching valve 400.

After flowing out of the flow path switching valve 400, the refrigerant flows into the outdoor heat exchanger 15 and condenses by radiating heat in the outdoor heat exchanger 15. After flowing out of the outdoor heat exchanger 15, the refrigerant is decompressed in an outdoor expansion valve 17, and then flows into the indoor heat exchanger 19. The refrigerant evaporates in the indoor heat exchanger 19 to turn into the low-pressure gas refrigerant.

After flowing out of the indoor heat exchanger 19, the low-pressure gas refrigerant flows into the flow path switching valve 400, flows through the third port Pi3, the valve chamber 30, and the fourth port Pi4´, and then flows out of the flow path switching valve 400. After flowing out of the flow path switching valve 400, the refrigerant is sucked into the compressor 11 via the accumulator 21.

### (5-1-2) Flow path switching valve 400 during heating operation

As illustrated in FIG. 13, during the heating operation, the valve element 50 is in the second state in which the first passage 51 causes the first port Pi1 and the third port Pi3 to communicate with each other.

The high-pressure gas refrigerant, which has been discharged from the compressor 11, flows into the flow path switching valve 400, flows through the first port Pi1, the first passage 51, and the third port Pi3, and then flows out of the flow path switching valve 400.

After flowing out of the flow path switching valve 400, the refrigerant flows into the indoor heat exchanger 19 and condenses by radiating heat in the indoor heat exchanger 19. After flowing out of the indoor heat exchanger 19, the refrigerant is decompressed in the outdoor expansion valve 17, and then flows into the outdoor heat exchanger 15. The refrigerant evaporates in the outdoor heat exchanger 15 to turn into the low-pressure gas refrigerant.

After flowing out of the outdoor heat exchanger 15, the low-pressure gas refrigerant flows into the flow path switching valve 400, flows through the second port Pi2, the valve chamber 30, and the fourth port Pi4´, and then flows out of the flow path switching valve 400. After flowing out of the flow path switching valve 400, the refrigerant is sucked into the compressor 11 via the accumulator 21.

### (5-1-3) Features of flow path switching valve 400 applied as four-way switching valve

It is apparent from FIGS. 12 and 13 that the high-pressure gas refrigerant flows through the first passage 51 of the valve element 50 whereas the low-pressure gas refrigerant flows through the valve chamber 30, that is, flows around the valve element 50. As described above, the flow path switching valve 400 is usable as a four-way switching valve that makes a refrigerant pressure within the valve element 50 higher than a pressure around the valve element 50.

### (5-2) Case where refrigerant pressure within valve element 50 becomes lower than pressure around valve element 50

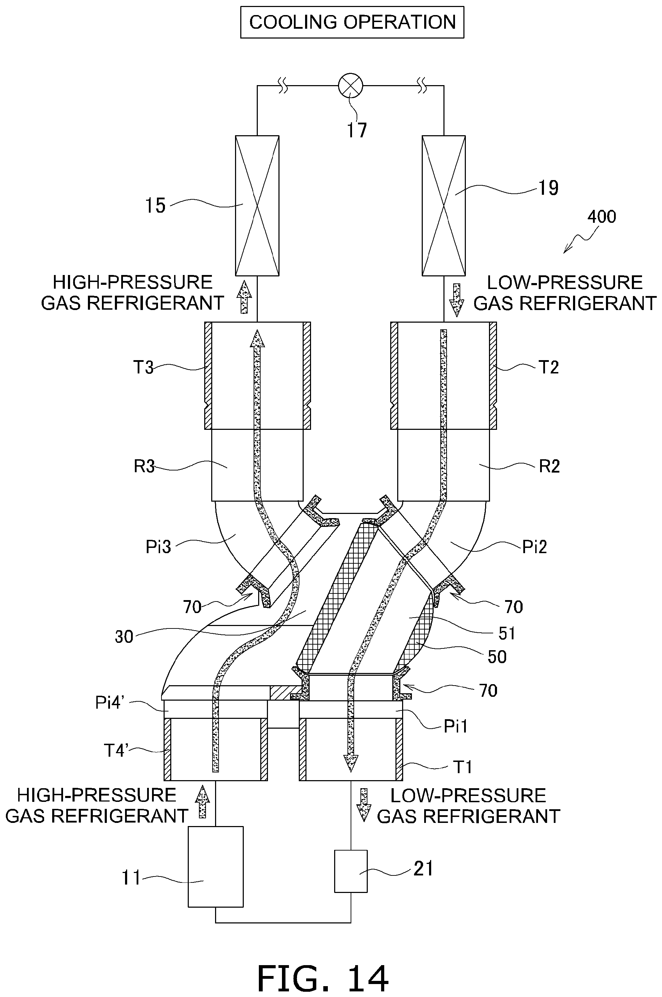

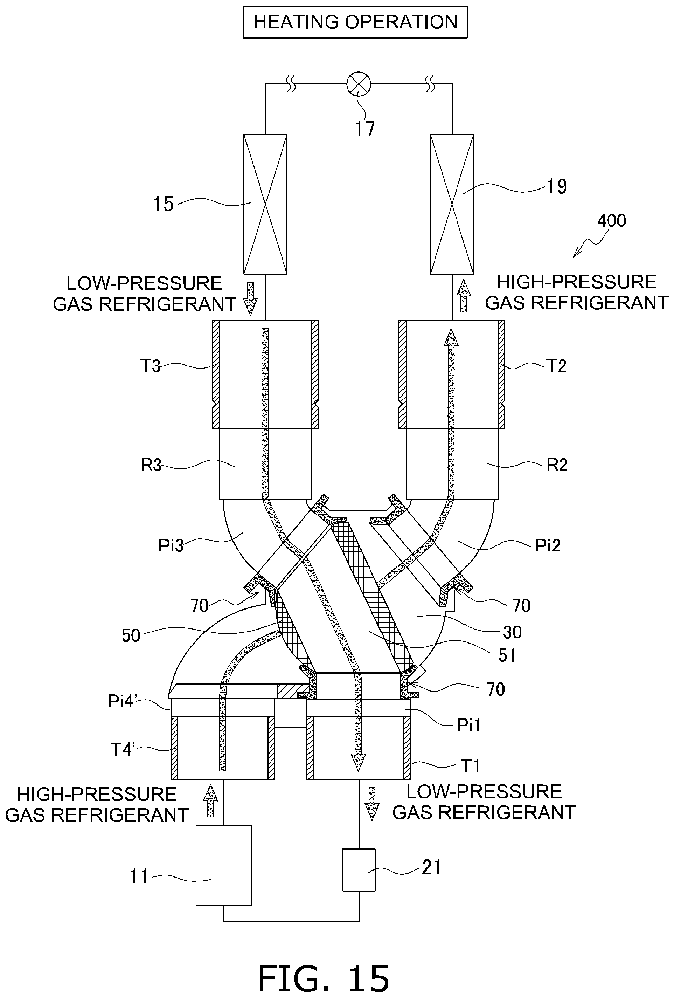

FIG. 14 is another diagram illustrating the first state of the valve element 50 and the flow direction of the refrigerant in the flow path switching valve 400, which is applied as a four-way switching valve, during the cooling operation. FIG. 15 is another diagram illustrating the second state of the valve element 50 and the flow direction of the refrigerant in the flow path switching valve 400, which is applied as a four-way switching valve, during the heating operation.

As illustrated in FIGS. 14 and 15, in the flow path switching valve 400, the fourth port Pi4´ in diameter sets to be equal in port diameter to the first port Pi1, the second port Pi2, and the third port Pi3. Accordingly, the fourth copper pipe T4´ in diameter sets to be equal in diameter to the first copper pipe T1, the second copper pipe T2, and the third copper pipe T3.

The fourth copper pipe T4´ is connected to the discharge side of the compressor 11, and the first copper pipe T1 is connected to the suction side of the compressor 11 via the accumulator 21. The third copper pipe T3 is connected to the outdoor heat exchanger 15, and the second copper pipe T2 is connected to the indoor heat exchanger 19.

### (5-2-1) Flow path switching valve 400 during cooling operation

As illustrated in FIG. 14, during the cooling operation, the valve element 50 is in the first state in which the first passage 51 causes the first port Pi1 and the second port Pi2 to communicate with each other.

The high-pressure gas refrigerant, which has been discharged from the compressor 11, flows into the flow path switching valve 400, flows through the fourth port Pi4´, the valve chamber 30, and the third port Pi3, and then flows out of the flow path switching valve 400.

After flowing out of the flow path switching valve 400, the refrigerant flows into the outdoor heat exchanger 15 and condenses by radiating heat in the outdoor heat exchanger 15. After flowing out of the outdoor heat exchanger 15, the refrigerant is decompressed in the outdoor expansion valve 17, and then flows into the indoor heat exchanger 19. The refrigerant evaporates in the indoor heat exchanger 19 to turn into the low-pressure gas refrigerant.

After flowing out of the indoor heat exchanger 19, the low-pressure gas refrigerant flows into the flow path switching valve 400, flows through the second port Pi2, the first passage 51, and the first port Pi1, and then flows out of the flow path switching valve 400. After flowing out of the flow path switching valve 400, the refrigerant is sucked into the compressor 11 via the accumulator 21.

### (5-2-2) Flow path switching valve 400 during heating operation

As illustrated in FIG. 15, during the heating operation, the valve element 50 is in the second state in which the first passage 51 causes the first port Pi1 and the third port Pi3 to communicate with each other.

The high-pressure gas refrigerant, which has been discharged from the compressor 11, flows into the flow path switching valve 400, flows through the fourth port Pi4´, the valve chamber 30, and the second port Pi2, and then flows out of the flow path switching valve 400.

After flowing out of the flow path switching valve 400, the refrigerant flows into the indoor heat exchanger 19 and condenses by radiating heat in the indoor heat exchanger 19. After flowing out of the indoor heat exchanger 19, the refrigerant is decompressed in the outdoor expansion valve 17, and then flows into the outdoor heat exchanger 15. The refrigerant evaporates in the outdoor heat exchanger 15 to turn into the low-pressure gas refrigerant.

After flowing out of the outdoor heat exchanger 15, the low-pressure gas refrigerant flows into the flow path switching valve 400, flows through the third port Pi3, the first passage 51, and the first port Pi1, and then flows out of the flow path switching valve 400. After flowing out of the flow path switching valve 400, the refrigerant is sucked into the compressor 11 via the accumulator 21.

### (5-2-3) Features of flow path switching valve 400 applied as four-way switching valve

It is apparent from FIGS. 14 and 15 that the low-pressure gas refrigerant flows through the first passage 51 of the valve element 50 whereas the high-pressure gas refrigerant flows through the valve chamber 30, that is, flows around the valve element 50. As described above, the flow path switching valve 400 is usable as a four-way switching valve that makes a refrigerant pressure within the valve element 50 lower than a pressure around the valve element 50.

While an embodiment of the present disclosure has been described herein above, it is to be appreciated that various changes in form and detail may be made without departing from the spirit and scope of the present disclosure presently or hereafter claimed.

### REFERENCE SIGNS LIST

1: air conditioning apparatus
2: outdoor unit
3: indoor unit
30: valve chamber
40: valve body
50, 150, 250: valve element
51, 151, 251: first passage
60: driver unit
70, 170, 270: seal member
80, 180, 280: base portion
81, 181, 281: connection portion
83, 183, 283: shaft portion
90, 190, 290: extended portion
100, 200: flow path switching valve
300, 400: flow path switching valve
Pi1: first port
Pi2: second port
Pi3: third port
S: space
θ: open angle

### CITATION LIST

### PATENT LITERATURE

Patent Literature 1: JP S64-058874 A

## Claims

1. A flow path switching valve (100) comprising:
a valve body (40) wherein a valve chamber (30) is formed internally, and at least three or more ports (Pi1 to Pi3) serving as fluid inlets and outlets are provided on the wall surface forming the valve chamber (30);
a valve element (50) disposed in the valve chamber (30) and having a first passage (51) through which the fluid flows;
a driver unit (60) configured to drive the valve element (50) to bring about a communication state in which the first passage (51) and any of the ports (Pi1 to Pi3) communicate with each other; and
a seal member (70) sealing an interface between the valve element (50) and ports (Pi1 to Pi3),
wherein
the seal member (70) includes:
a base portion (80) disposed on the port side; and
an extended portion (90) extended so as to open from the base portion (80) toward the valve element (50), and brought into contact with the valve element (50) while being biased toward the valve element (50) in the communication state.

2. The flow path switching valve (100) according to claim 1, wherein
a space (S) is provided to allow a bend of the extended portion (90).

3. The flow path switching valve (100) according to claim 2, wherein
the space (S) is located between the base portion (80) and the extended portion (90), and
the extended portion (90) bends with respect to the base portion (80).

4. The flow path switching valve (100) according to any one of claims 1 to 3, wherein
a maximum opposite angle across an inner surface of the extended portion (90) , which is an open angle (θ), and the open angle (θ) when the extended portion (90) is in contact with the valve element (50) is larger than the open angle (θ) when the extended portion (90) is not in contact with the valve element (50).

5. The flow path switching valve (100) according to any one of claims 1 to 4, wherein
the valve element (50) is in contact with an area between a center and a distal end of the extended portion (90) in a no-load state in which no fluid flows through the first passage (51) of the valve element (50).

6. The flow path switching valve (100) according to any one of claims 1 to 5, wherein
the base portion (80) includes:
a connection portion (81) having a ring shape, the connection portion being in contact with the port (Pi1 to Pi3); and
a shaft portion (83) having a tubular shape and connecting the connection portion (81) and the extended portion (90), and
the shaft portion (83) is larger in thickness than a distal end of the extended portion (90).

7. The flow path switching valve (100) according to any one of claims 1 to 6, wherein
the valve body (40) includes a first port (Pi1), a second port (Pi2), and a third port (Pi3) as the aforementioned ports, and
the driver unit (60) drives the valve element (50) to switch the communication state to one of:
a first state in which the first passage (51) causes the first port (Pi1) and the second port (Pi2) to communicate with each other; and
a second state in which the first passage (51) causes the first port (Pi1) and the third port (Pi3) to communicate with each other.

8. The flow path switching valve (100) according to claim 7, wherein
the driver unit (60) rotates the valve element (50) to switch between the first state and the second state.

9. The flow path switching valve (100) according to any one of claims 1 to 8, wherein
the seal member (70) is made of a synthetic resin.

10. The flow path switching valve (100) according to any one of claims 1 to 9, wherein
the open angle (θ) of the extended portion (90) which is not in contact with the valve element (50) is within a range from 60° to 120°.

11. The flow path switching valve (100) according to any one of claims 1 to 10, wherein
the seal member (70) and the port (Pi2, Pi3) are molded integrally.

12. The flow path switching valve (100) according to any one of claims 1 to 10, wherein
the seal member (70) and the port (Pi1) are molded separately.

13. The flow path switching valve (100) according to any one of claims 1 to 12, wherein
the first passage (51) is a tunnel-shaped passage extending through the valve element (50) or is a groove-shaped passage located in a peripheral surface of the valve element (50).

14. The flow path switching valve (100) according to any one of claims 1 to 12, wherein
a fluid pressure within the valve element (50) is higher than a pressure around the valve element (50).

15. The flow path switching valve (100) according to any one of claims 1 to 12, wherein
a fluid pressure within the valve element (50) is lower than a pressure around the valve element (50).

16. An indoor unit of an air conditioning apparatus,
the indoor unit comprising the flow path switching valve (100) according to any one of claims 1 to 13.

17. An outdoor unit of an air conditioning apparatus,
the outdoor unit comprising the flow path switching valve (100) according to any one of claims 1 to 13.
